Europäisches Patentamt

European Patent Office

Office européen des brevets

(19)

(11)     EP 1 301 088 B1

(12)     FASCICULE DE BREVET EUROPEEN

(45) Date de publication et mention
de la délivrance du brevet:
**18.10.2006   Bulletin 2006/42**

(51) Int Cl.:
*A23J 1/00* [(2006.01)]     *A23J 3/30* [(2006.01)]
*A23J 3/20* [(2006.01)]     *A23J 3/14* [(2006.01)]

(21) Numéro de dépôt: **01955440.1**

(22) Date de dépôt: **19.07.2001**

(86) Numéro de dépôt international:
**PCT/FR2001/002348**

(87) Numéro de publication internationale:
**WO 2002/007528 (31.01.2002 Gazette 2002/05)**

(54) **PROCEDE D'EXTRACTION ET D'AMELIORATION DE LA DIGESTIBILITE DES PROTEINES DE PALMARIA PALMATA.**

VERFAHREN ZUR EXTRAKTION UND VERBESSERUNG DER VERDAUBARKEIT VON PALMARIA PALMATA PROTEINEN

METHOD FOR EXTRACTING AND IMPROVING DIGESTIBILITY OF  PALMARIA PALMATA PROTEINS

(84) Etats contractants désignés:
**AT BE CH CY DE DK ES FI FR GB GR IE IT LI LU MC NL PT SE TR**

(30) Priorité:  **21.07.2000  FR 0009590**

(43) Date de publication de la demande:
**16.04.2003   Bulletin 2003/16**

(73) Titulaire: **IFREMER
INSTITUT FRANCAIS DE RECHERCHE POUR L'EXPLOITATION DE LA MER
92130 Issy-les-Moulineaux (FR)**

(72) Inventeurs:
• **FLEURENCE, Joel
F-44130 Fay de Bretagne (FR)**
• **ANTOINE, Elizabeth
F-44300 NANTES (FR)**
• **LUCON, Michel
F-44300 NANTES (FR)**

(74) Mandataire: **Goulard, Sophie et al
Cabinet ORES,
36,rue de St Pétersbourg
75008 Paris Cedex (FR)**

(56) Documents cités:
• **LAHAYE MARC ET AL: "Liquefaction of dulse Palmaria palmata (L.) Kuntze) by a commercial enzyme preparation and a purified endo-beta-1,4-D-xylanase." JOURNAL OF APPLIED PHYCOLOGY, vol. 4, no. 4, 1992, pages 329-337, XP000990831 ISSN: 0921-8971**
• **FLEURENCE JOEL ET AL: "Use of enzymatic cell wall degradation for improvement of protein extraction from Chondrus crispus, gracilaria verrucosa and Palmaria palmata." JOURNAL OF APPLIED PHYCOLOGY, vol. 7, no. 4, 1995, pages 393-397, XP000990747 ISSN: 0921-8971 cité dans la demande**
• **FLEURENCE JOEL: "The enzymatic degradation of algal cell walls: A useful approach for improving protein accessibility?" JOURNAL OF APPLIED PHYCOLOGY, vol. 11, no. 3, 1999, pages 313-314, XP000990731 ISSN: 0921-8971 cité dans la demande**
• **GALLAND-IRMOULI A V ET AL: "One-step purification of R-phycoerythrin from the red macroalga Palmaria palmata using preparative polyacrylamide gel electrophoresis" JOURNAL OF CHROMATOGRAPHY. BIOMEDICAL APPLICATIONS,NL,ELSEVIER, AMSTERDAM, vol. 739, no. 1, février 2000 (2000-02), pages 117-123, XP004190293 ISSN: 0378-4347**

**EP 1 301 088 B1**

• GALLAND-IRMOULI A-V ET AL: "NUTRITIONAL VALUE OF PROTEINS FROM EDIBLE SEAWEED PALMARIA PALMATA (DULSE)" JOURNAL OF NUTRITIONAL BIOCHEMISTRY, BUTTERWORTH PUBLISHERS, STONEHAM, GB, vol. 10, juin 1999 (1999-06), pages 353-359, XP000990721 ISSN: 0955-2863

• NIKOLAEVA E V ET AL: "Degradation of agarophytic red algal cell wall components by new crude enzyme preparations." JOURNAL OF APPLIED PHYCOLOGY, vol. 11, no. 4, 1999, pages 385-389, XP000990839 ISSN: 0921-8971

**Description**

La présente invention est relative à l'utilisation d'une composition enzymatique comprenant l'association spécifique de deux enzymes sélectionnées pour améliorer la digestibilité de la fraction protéique soluble de *P. palmata,* à un procédé d'extraction des protéines de l'algue *Palmaria palmata,* ainsi qu'à la fraction protéique soluble obtenue par ce procédé et son utilisation dans l'industrie alimentaire.

La production annuelle globale d'algues marines est d'environ de $6,5.10^6$ tonnes (algues fraîches). Les algues marines sont principalement exploitées dans l'industrie agro-alimentaire. En particulier, dans les pays asiatiques, les algues marines sont très souvent consommées comme légumes.

En Europe, les algues et plus particulièrement les algues brunes sont traditionnellement utilisées pour la production d'additifs tels que les alginates ou pour l'alimentation animale (Indegaard *et al.,* Seaweed Ressources in Europe, 1991, 21-64).

Dans la plupart des cas, les algues sont utilisées dans l'alimentation humaine ou animale pour leur teneur en éléments minéraux et les propriétés fonctionnelles des polysaccharides qu'elles renferment. Les algues sont plus rarement valorisées pour la valeur nutritionnelle des protéines qu'elles renferment.

Les algues, et en particulier les algues rouges sont également utilisées pour la production d'une protéine particulière la R-phycoérythrine qui est couramment utilisée comme pigment rouge dans l'industrie cosmétique et dans le domaine médical à titre de réactif fluorescent pour le diagnostic immunologique et qui pourrait être utilisée dans l'industrie alimentaire. Cette protéine représente jusqu'à 12% de la fraction protéique de *Palmaria palmata.* La phycoérythrine peut notamment être obtenue par broyage d'algues sèches puis par extraction en solution en milieu aqueux phosphaté (US 5 358 858). Cependant de telles techniques d'extraction ont tendance à dénaturer la R-phycoérythrine.

La teneur en protéines des algues varie en fonction des espèces. En général, la fraction protéique des algues brunes est faible (3 à 15% du poids sec de l'algue), alors que celle des algues rouges ou vertes est plus élevée (10-47% du poids sec).

En particulier, les teneurs en protéines des algues rouges telles que *Porphyra tenera* et *Palmaria palmata* peuvent atteindre respectivement 47% et 35% du poids sec (Morgan *et al.,* Econ. Bot., 1980, 34, 27-50). Ces deux algues rouges, également dénommées "Nori" et Dulse" respectivement, ont des teneurs en protéines plus élevées que celle du soja.

La teneur en protéines des algues marines est soumise à une variabilité saisonnière. Une étude de la teneur en protéines de *P. palmata* ramassée sur la côte atlantique française tout au long de l'année a montré que la teneur moyenne en protéines de cette algue peut varier entre 9 et 25% (poids sec). Les teneurs les plus importantes sont observées à la fin de l'hiver et au début du printemps, les teneurs les plus faibles sont observées à la fin de l'été et au début de l'automne (Galland-Irmouli *et al.,* J. of Nutr. Biochem., 1999, **10,** 353-359).

La composition en acides aminés des algues a été fréquemment étudiée et comparée à celle d'autres aliments riches en protéines tels que les oeufs et le soja.

Alors que chez la plupart des algues, notamment chez les algues brunes, les acides aspartique et glutamique constituent ensemble une large part de la fraction en acides aminés (22-44%), cette teneur est plus faible chez les algues rouges telles que *Porphyra tenera* (19%) et *P. palmata* (14%) (Indegaard *et al.,* pré-cité).

En ce qui concerne l'espèce *P. palmata,* la leucine, la valine et la méthionine représentent une partie importante de la fraction en acides aminés essentiels.

Les teneurs moyennes de ces acides aminés sont proches de celles observées dans l'ovalbumine. D'autre part, les teneurs en isoleucine et en thréonine sont similaires à celles des légumineuses. Sauf pour l'histidine, la nature et les teneurs en acides aminés constituant les protéines de *P. palmata* sont assez proches de celles observées pour les légumineuses.

Compte tenu de leur forte teneur en protéines et de leur composition variée en acides aminés, les algues rouges et en particulier *P. palmata* représentent donc une source potentielle intéressante de protéines utilisables pour l'alimentation humaine ou animale.

Différents procédés d'extraction des protéines d'algues, et en particulier de *P. palmata* ont déjà été proposés. Il a ainsi été décrit des méthodes physico-chimiques telles que par exemple l'extraction dans de l'eau déionisée (choc osmotique), ou dans un tampon Tris HCl éventuellement suivie d'une sonication, ou bien encore l'extraction en milieu alcalin (J. Fleurence *et al.,* J. of Appl. Phycol., 1995, 7, 577-582).

Si de telles méthodes permettent d'extraire d'importantes quantités de protéines, elles sont cependant assez agressives et ont pour conséquence de dénaturer les protéines ainsi extraites. Cette dénaturation a bien entendu des conséquences négatives sur les propriétés nutritionnelles des protéines ainsi obtenues.

Par conséquent, pour être utilisées dans l'industrie alimentaire humaine ou animale, les protéines doivent conserver au maximum leur intégrité structurale et présenter une bonne digestibilité.

Selon l'invention, par digestibilité, on entend la capacité qu'ont les sucs digestifs humains à dégrader les protéines lorsque celles-ci sont ingérées.

De récentes études ont montré que la digestibilité relative à la pepsine et à la pancréatine des protéines d'une poudre de *P. palmata* (exprimée par rapport à la caséine) est d'environ 56% (Galland-Irmouli *et al.,* pré-cité).

De plus, les protéines de *P. palmata* extraites dans l'eau ou dans un tampon faiblement ionique sont peu sensibles *in vitro* à l'action des sucs digestifs humains (J. Fleurence *et al.,* Biofutur, 1999, 191, 32-36).

D'autres techniques d'extraction des protéines algales, telles que des techniques d'extraction enzymatiques ont également été proposées.

Les enzymes utilisées sont en général des polysaccharidases telles que des cellulases, des xylanases, des agarases, des β-glucanases, des hémicellulases ou bien encore des carraghénases.

Différentes études ont été effectuées concernant l'extraction enzymatique des protéines algales et ont montré que le rendement d'extraction de ces protéines peut varier dans de larges proportions en fonction de l'espèce des algues et de la nature des enzymes utilisées.

C'est ainsi par exemple que sur l'algue *Chondrus crispus,* l'utilisation d'un mélange de carraghénase et de cellulase permet d'extraire une fraction protéique beaucoup plus importante que chacune des fractions protéiques extraites avec les mêmes enzymes utilisées séparément.

De la même façon, sur l'algue *Gracilaria verrucosa,* l'utilisation d'un mélange d'agarase et de cellulase donne de meilleurs résultats en terme d'extraction protéique que chacune des enzymes utilisées séparément.

Par contre, sur l'algue *P. palmata,* c'est l'utilisation isolée de xylanase ou de cellulase qui conduit, en terme d'extraction, aux meilleurs résultats, la fraction protéique obtenue avec un mélange de xylanase et de cellulase étant beaucoup plus faible et pratiquement identique à celle qui est obtenue pour une extraction réalisée sans l'aide d'enzyme (Fleurence *et al.,* J. of Appl. Phycol., 1995, 7, 393-397).

Ces techniques d'extractions enzymatiques nécessitent par conséquent une grande adaptation en fonction de chaque variété d'algue (J. Fleurence, J. of Appl. Phycol., 1999, 11, 313-314). De plus, les enzymes ou mélanges d'enzymes donnant les meilleurs résultats en terme d'extraction protéique ne permettent pas d'améliorer simultanément la digestibilité des protéines de façon satisfaisante.

C'est afin de remédier à ces problèmes que, de façon surprenante, les Inventeurs ont mis au point ce qui fait l'objet de l'invention.

Les Inventeurs ont en effet découvert, de façon surprenante, que l'utilisation d'une combinaison d'enzymes spécifiquement sélectionnées permet non seulement de réaliser une extraction efficace des protéines de *P. palmata* mais également d'obtenir des protéines présentant de bonnes propriétés de digestibilité qui peuvent par conséquent être avantageusement utilisées dans l'alimentation humaine ou animale.

La présente invention a donc pour objet l'utilisation d'une composition enzymatique comprenant au moins une première enzyme choisie parmi les xylanases et au moins une seconde enzyme choisie parmi les cellulases et les β-glucanases dans un procédé d'extraction des protéines de l'algue *P. palmata* comprenant au moins une étape d'extraction enzymatique dans un milieu d'extraction approprié selon laquelle on soumet des fragments lyophilisés de ladite algue à l'action de ladite composition enzymatique et une étape de récupération des protéines extraites, pour améliorer la digestibilité de la fraction protéique soluble de *P. palmata.*

Ainsi que cela est démontré dans l'exemple ci-après, l'utilisation d'une telle composition enzymatique au cours du procédé d'extraction enzymatique permet non seulement d'extraire les protéines de l'algue *P. palmata* avec un taux de récupération acceptable mais également d'améliorer la digestibilité de ces mêmes protéines.

L'invention a également pour objet un procédé d'extraction des protéines de l'algue *P. palmata* comprenant au moins une étape d'extraction enzymatique et une étape de récupération des protéines extraites, caractérisé par le fait que lors de l'étape d'extraction enzymatique, on soumet, dans un milieu d'extraction approprié, des fragments lyophilisés de ladite algue à l'action d'une composition enzymatique comprenant au moins une combinaison d'au moins deux enzymes, la première enzyme étant choisie parmi les xylanases de *Trichoderma reesi,* les xylanases d'*Aspergillus aculeatus et d'Aspergillus oryzae* modifié génétiquement pour la production de xylanase d'*Aspergillus aculeatus,* et la seconde enzyme étant choisie parmi les cellulases et les β-glucanases, pour obtenir une fraction protéique soluble de *P. palmata.*

Le procédé d'extraction enzymatique conforme à l'invention permet à la fois d'extraire les protéines de l'algue *P. palmata* avec un taux de récupération acceptable mais également d'améliorer la digestibilité de ces mêmes protéines.

Le procédé conforme à l'invention permet également d'extraire de façon non dénaturante la R-phycoérythrine qui peut ensuite être avantageusement utilisée dans les industries cosmétique, alimentaire et pour le diagnostic biomédical.

Selon l'invention et avant l'étape d'extraction enzymatique proprement dite, les algues *P. palmata* récoltées sont en général débarrassées de leurs contaminants et de leurs épiphytes puis le matériel algal est rincé à l'eau de mer puis à l'eau distillée. Le matériel algal est ensuite lyophilisé, sans opération préalable de broyage, et conservé après lyophilisation à l'obscurité et à température ambiante.

Au moment de la procédure d'extraction enzymatique, le matériel algal ainsi lyophilisé est en général découpé en petits fragments de taille homogène, par exemple en fragments de 1 cm$^2$.

Les enzymes utilisées selon le procédé conforme à l'invention sont de préférence issues de microorganismes, ces microorganismes pouvant éventuellement être génétiquement modifiés.

Les xylanases d'*Aspergillus aculeatus* et *d'Aspergillus oryzae* modifié génétiquement pour la production de xylanase d'*Aspergillus aculeatus* sont particulièrement préférées selon l'invention.

Les cellulases sont de préférence choisies parmi les cellulases de *Trichoderma reesi* et *Trichoderma viride.*

Les β-glucanases sont de préférence choisies parmi les β-glucanases d'*Aspergillus niger* et d'*Humicola insolens.*

Selon une forme de réalisation avantageuse du procédé conforme à l'invention, la première enzyme est choisie parmi les xylanases d'*Aspergillus aculeatus* et *d'Aspergillus oryzae* modifié génétiquement pour la production de xylanase *d'Aspergillus aculeatus* et la seconde enzyme est choisie parmi les cellulases de *Trichoderma reesi.*

Selon une autre forme de réalisation avantageuse du procédé conforme à l'invention, la première enzyme est choisie parmi les xylanases *d'Aspergillus aculeatus* et *d'Aspergillus oryzae* modifié génétiquement pour la production de xylanase d'*Aspergillus aculeatus* et la seconde enzyme est choisie parmi les β-glucanases d'*Humicola insolens.*

La quantité totale d'enzymes présentes dans la composition enzymatique utilisée selon le procédé conforme à l'invention varie en fonction de la quantité en poids des fragments d'algue à traiter. Elle est exprimée en unités/g d'algue (U/g).

Selon l'invention, et à titre de référence, 1 unité U correspond à la quantité d'enzyme capable de libérer 1 μmole d'oses en 1 minute à une température de 40°C.

La première enzyme représente de préférence de 0,01 à 10 % en poids du poids des fragments de l'algue à traiter et encore plus préférentiellement de 0,1 à 2 % en poids.

La deuxième enzyme représente de préférence de 0,3 à 10 % en poids du poids des fragments de l'algue à traiter et encore plus préférentiellement de 2 à 8 % en poids.

La quantité totale d'enzymes est de préférence comprise entre 5 et 20 U/g de fragment d'algue à traiter et encore plus préférentiellement entre 10 et 15 U/g.

Le milieu d'extraction utilisé selon le procédé conforme à l'invention est de préférence un milieu tampon compatible avec les activités enzymatiques utilisées, ledit tampon pouvant notamment être choisi parmi l'acétate de sodium, les tampons phosphate tels que le phosphate de sodium, l'oxalate de sodium, etc.

Selon une forme de réalisation avantageuse du procédé conforme à l'invention, le tampon utilisé est l'acétate de sodium.

Les fragments d'algue représentent de préférence de 1 à 15 % en poids du poids total du milieu d'extraction et encore plus préférentiellement de 2 à 10 % en poids.

Selon le procédé conforme à l'invention, l'étape d'extraction enzymatique est de préférence réalisée à une température comprise entre 35 et 50°C et encore plus particulièrement entre 37 et 45°C.

La réaction d'extraction enzymatique est en général conduite pendant une durée pouvant varier entre 1 et 24 heures et de préférence entre 4 et 12 heures.

Le pH du milieu d'extraction doit bien entendu être compatible avec l'activité optimale des enzymes utilisées, il est de préférence compris entre 3 et 8 et encore plus préférentiellement entre 4 et 7. Il peut être ajusté au moyen d'agents alcalifiants ou acidifiants classiques et est maintenu à une valeur sensiblement stable durant toute la durée de l'extraction enzymatique grâce à la présence d'un tampon tel que ceux mentionnés ci-dessus.

Une fois la réaction d'extraction enzymatique terminée, les protéines ainsi obtenues (fraction protéique soluble) peuvent être récupérées dans le surnageant du milieu d'extraction par différentes techniques séparatives ou de concentration telles que par exemple la centrifugation, la filtration, la dialyse, etc.

La fraction protéique soluble ainsi obtenue peut ensuite être conservée par exemple sous forme lyophilisée.

De part sa digestibilité améliorée, la fraction protéique ainsi obtenue peut ainsi être utilisée dans l'industrie alimentaire, notamment à titre de complément nutritionnel dans l'alimentation humaine ou animale.

D'autre part, cette fraction protéique soluble renferme de la R-phycoérythrine qui peut être ensuite séparée du reste de la fraction protéique totale par des méthodes classiques de séparation telles que l'électrophorèse préparative (Galland-Irmouli *et al.,* 2000, Journal of Chromatography B, **739**,117-123) ou par chromatographie sur gel échangeur d'ions (Hilditch *et al.,* J. Appl. Phycol., 1991, 3, 345). La R-phycoérythrine ainsi obtenue présente une bonne intégrité structurale car elle n'est pas dénaturée lors de l'étape d'extraction enzymatique. Elle peut donc être avantageusement utilisée dans l'industrie alimentaire ou cosmétique et dans le domaine biomédical.

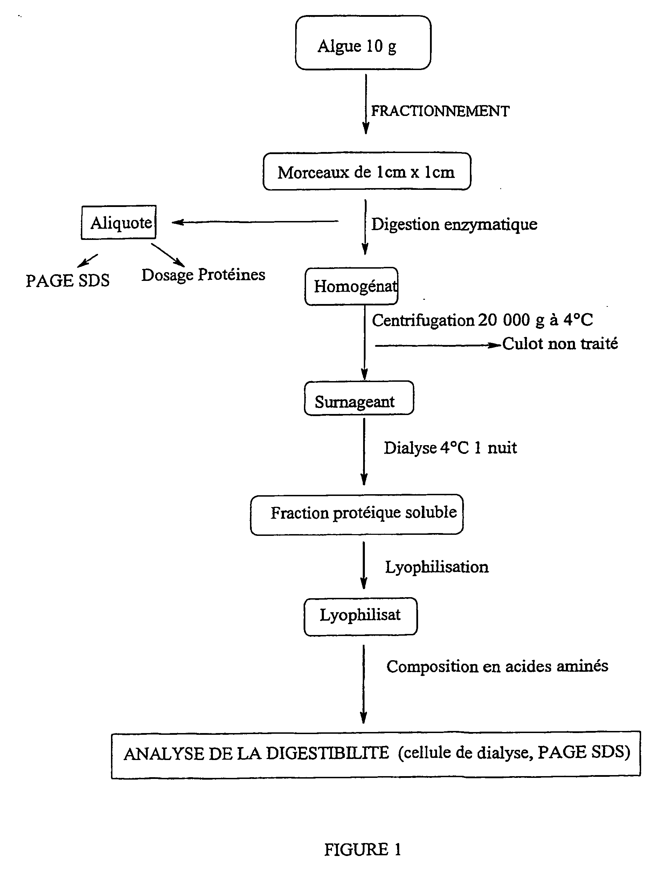

Outre les dispositions qui précèdent, l'invention comprend encore d'autres dispositions qui ressortiront de la description qui va suivre, laquelle se réfère à un exemple de démonstration de l'amélioration de la digestibilité des protéines de *P. palmata,* ainsi qu'à la figure 1 annexée qui représente sous forme schématique le principe général du traitement enzymatique utilisé dans l'exemple qui va suivre.

**EXEMPLE : DÉMONSTRATION DE L'AMÉLIORATION DE LA DIGESTIBILITÉ DES PROTÉINES DE P. *PALMATA*.**

**I) Matériel et méthodes**

**1.1 Échantillonnage**

Les échantillons de *P. palmata* utilisés dans cet exemple ont été récoltés sur le site de Belle Ile en mer (Morbihan), au lieu dit "le Gros Rocher" en mai 1999.

**1.2 Préparation des échantillons**

Les spécimens récoltés sont débarrassés de leurs contaminants et de leurs épiphytes puis le matériel algal est rincé selon la procédure décrite par Fleurence *et al.,* J. of Appl. Phycol., 1995, 7, 393-397. Le matériel algal est ensuite lyophilisé, sans opération préalable de broyage, et conservé après lyophilisation à l'obscurité et à température ambiante.

**1.3 Nature des enzymes testées**

Les enzymes testées sont les suivantes :

Cellulases :

- Celluclast® de *Trichoderma reesi* vendu par la société Novo
- Cellulyve TR 400® de *Trichoderma reesi* vendu par la société Lyven

Xylanases :

- Feedlyve AXC® de *Trichoderma reesi* vendu par la société Lyven
- Panlyve HCB 10® d'*Aspergillus niger* vendu par la société Lyven
- Shearzyme® d'*Aspergillus oryzae* modifié génétiquement pour la production de xylanase d'*Aspergillus aculeatus,* vendu par la société Novo

β-glucanases :

- Finizym® d'*Aspergillus niger* vendu par la société Novo
- Ultraflow® d'*Humicola insolens* vendu par la société Novo

Combinaisons d'enzymes :

- cellulase + xylanase (Celluclast® + Shearzyme®)
- cellulase + β-glucanase (Celluclast® + Ultraflow® et Celluclast® + Finizym®)
- xylanase + β-glucanase (Shearzyme® + Ultraflow®)

**1.4 Procédure de traitement enzymatique**

10 grammes d'algues lyophilisées, mais non broyées, sont découpés en petits fragments homogènes d'environ 1 cm² (Figure 1). Les morceaux obtenus sont ensuite placés un réacteur enzymatique à double enveloppe pourvu d'un agitateur magnétique contenant le milieu d'extraction, à raison de 10 g d'algue pour 300 ml d'acétate de sodium 0,05 M à pH 5. La quantité de poudre enzymatique à utiliser est calculée en fonction des activités spécifiques de chaque enzyme données par les fournisseurs afin d'être dans des conditions d'activité optimale (Vmax).

Conditions d'hydrolyse :

- Température : 40°C (Cellulyve®, Feedlyve®, Panlyve® et combinaisons d'enzymes) ;
  45°C (Shearzyme®, Celluclast®, Ultraflow® et Finizym®)
- Tampon d'extraction : Acétate de sodium 50 mM, pH 5
- Agitation : 250 t/mn
- Matière première : algue lyophilisée
- Rapport matière première/tampon : 3,3%
- Rapport enzyme/substrat : 12 U/g environ

Une hydrolyse témoin a été effectuée dans les mêmes conditions mais sans enzyme.

L'hydrolyse a été suivie pendant 24 heures, des prélèvements (aliquotes) ont été effectués régulièrement dans le temps dans le surnageant du milieu réactionnel. Après une incubation de 24 heures, l'homogénat est récupéré et soumis à une centrifugation de 20000g (20 mn, 4°C).

Le culot est éliminé et le surnageant est conservé (Figure 1), ce dernier est représentatif de la fraction protéique hydrosoluble.

Le surnageant est ensuite lyophilisé.

Le surnageant est ensuite dialysé contre de l'eau déminéralisée pendant 1 nuit à 4°C. La solution ainsi débarrassée de ses sels est ensuite lyophilisée, la poudre algale ainsi obtenue est conservée à température ambiante à l'abri de la lumière.

Ce lyophilisat est utilisé comme matériel de départ pour l'évaluation de la digestibilité *in vitro* des protéines algales solubilisées et l'analyse de leur composition en acides aminés. L'étude de ces 2 caractéristiques permet d'évaluer la valeur nutritionnelle de la fraction protéique extraite par le traitement enzymatique.

1.5 Dosage des protéines

L'évaluation de la teneur en protéines a été réalisée en utilisant la méthode de dosage de l'azote total par la méthode de Kjeldahl. Le dosage de l'azote a été effectué sur l'algue de départ lyophilisée, sur le surnageant lyophilisé et sur le culot lyophilisé. Cette mesure permet de calculer la quantité de protéines obtenues (% N x 6,25 = % protéines).

Le dosage des protéines solubilisées dans le surnageant du milieu réactionnel a été réalisé par la réaction avec l'acide bicinchonique (Pierce, Rockford, IL, USA) selon la procédure préconisée par le fournisseur. L'albumine sérique bovine (BSA) est utilisée comme protéine de référence pour l'élaboration de la courbe étalon. Le dosage des protéines libérées dans le surnageant permet de suivre l'hydrolyse et de comparer l'efficacité des différentes enzymes. Pour cette comparaison, on a considéré les concentrations en protéines obtenues au bout de 8 heures d'hydrolyse qui correspond au temps maximum d'activité enzymatique.

**1.6 Détermination et dosage des acides aminés**

Il est effectué sur le surnageant du milieu réactionnel.

La composition de certains acides aminés essentiels (valine, méthionine, thréonine et leucine) des protéines est déterminée par la méthode d'analyse Waters AccQT®.

Cette méthode est basée sur une dérivation pré-colonne des acides aminés libres par le carbamate de 6-aminoquinolyl-N-hydroxysuccinimyle (AQC) et leur séparation analytique est réalisée par chromatographie liquide haute performance (HPLC) sur colonne en phase inverse du type C18 AccQTag® (Waters). La préparation d'acides aminés standard H (Pierce, pré-cité) est utilisée pour déterminer les concentrations en acides aminés des échantillons.

**1.7 Digestibilité *in vitro* de l'algue brute et de la fraction protéique solubilisée par le procédé enzymatique**

La méthode a été décrite par Savoie et Gauthier, J. of the Food Sc., 1986, 51, 494-498 et Savoie *et al.,* Plant Foods for Human Nutrition, 1989, 39, 93-107.

Il s'agit d'une méthode multi enzymatique de mesure de la digestibilité des protéines. Elle est effectuée à l'aide d'une cellule de digestion comprenant deux compartiments concentriques séparés par une membrane de dialyse dont la limite d'exclusion moléculaire est de 1000 Da.

Dans le compartiment interne sont réalisées les protéolyses. Des prélèvements en continu sont effectués dans le compartiment externe pour déterminer la quantité d'azote libéré.

Une prédigestion de 30 minutes à 37°C du substrat à étudier est opérée dans du tampon phosphate 0,01 M à pH 1,9 par de la pepsine de porc (SIGMA 1/60000 ; activité : 3200 U/mg) suivie d'une digestion enzymatique de 6 heures par la pancréatine de porc (Sigma, 18F-0809) dans du tampon phosphate 0,01 M à pH 7,5. La cellule de digestion est commercialisée par la société SERNA (Québec, Canada).

Un bain Marie permet de maintenir à 37°C la température de la cellule et du tampon venant remplacer le volume prélevé. Une pompe péristaltique est utilisée pour récupérer les digestas.

Des fractions sont collectées en continu toutes les heures pendant 6 heures, ce qui permet de décrire une cinétique de libération de l'azote et surtout d'évaluer la quantité d'azote libéré pendant 6 heures de digestion, cette quantité est considérée comme représentant la digestibilité protéique.

Le dosage de l'azote est réalisé par microKjeldahl. Le contenu en azote total de chaque fraction protéique obtenue selon le procédé conforme à l'invention a également été évalué par cette méthode. Cette mesure a pour but de permettre de peser ensuite une quantité d'échantillon de chacune de ces fractions protéiques qui contient 20 mg d'azote et qui est ensuite soumise à la digestion protéolytique

Dans le cas de Celluclast® et de Ultraflow®, la quantité d'azote a été 13,5 mg et non de 20 mg, car il y avait trop peu d'échantillon.

La pepsine est utilisée dans la proportion enzyme/substrat de 1/250 (mg d'azote/mg d'azote) et la pancréatine dans la proportion de 1/25. Le pourcentage d'azote libéré est calculé selon l'équation suivante :

$$\% \text{ d'azote libéré} = \frac{\text{quantité d'azote dans le dialysat prélevé x 100}}{\text{quantité d'azote initial (20 ou 13,5 mg)}}$$

Les résultats sont donnés sous deux formes : l'azote libéré au cours d'une, deux, trois, quatre, cinq et six heures d'hydrolyse et l'azote libéré par fraction d'une heure.

La digestibilité relative des protéines algales est également estimée au regard de la protéolyse de la caséine dans le même système opératoire, la digestion de la caséine représentant alors le 100% de la digestibilité.

## II) RÉSULTATS

### 2.1 Teneur en protéines totales

Le dosage de l'azote total était de 3,61%, par conséquent la teneur en protéines totales de l'algue utilisée dans cet exemple était de 6,25 x 3,61 = 22,6%.

L'hydrolyse ayant été réalisée sur 10 g d'algue, la fraction protéique contenue était donc de 2,26 g.

La quantité de protéines extraites dans le surnageant au bout de 8 heures en fonction de la nature de l'enzyme ou de la combinaison d'enzymes utilisées au cours de l'hydrolyse a également été étudiée. Les résultats apparaissent dans le Tableau I ci-après, l'action des enzymes étant classée par ordre croissant d'activité :

**Tableau I**

| Enzyme utilisée | Concentration en protéines en $\mu$g/ml |
|---|---|
| Cellulyve TR 400® | 1500 |
| Celluclast® | 4000 |
| Panlyve HCB 10® | 4700 |
| Feedlyve AXC® | 5000 |
| Shearzyme®+ Ultraflow® | 6000 |
| Celluclast® + Finizym® | 7000 |
| Shearzyme® | 8000 |
| Shearzyme®+ Finizym® | 8000 |
| Ultraflow® | 9000 |
| Celluclast® + Sheaizyme® | 10500 |
| Finizym® | 11000 |
| Celluclast® + Ultraflow® | 12000 |

On constate qu'en terme d'extraction protéique, les meilleurs résultats (12000 µg/ml) sont obtenus avec la combinaison enzymatique de Celluclast® + Ultraflow® qui correspond à l'association d'une cellulase de *Trichoderma reesi* et d'une β-glucanase d'*Humicola insolens.* De très bons résultats sont également obtenus avec Finizym® qui est une β-glucanase d'*Aspergillus niger* (11000 µg/ml), avec la combinaison enzymatique de Celluclast® + Shearzyme® qui correspond à l'association d'une cellulase de *Trichoderma reesi* et d'une xylanase *d'Aspergillus oryzae* modifié génétiquement pour la production de xylanase *d'Aspergillus aculeatus* ou bien encore avec Ultraflow® qui correspond à la β-glucanase d'*Humicola insolens* utilisée seule.

### 2.2 Détermination et dosage des acides aminés essentiels

La teneur de référence en acides aminés totaux de *P. palmata* est de 192,24 mg/g.

Les résultats obtenus après hydrolyse enzymatique sont regroupés dans le Tableau II ci-après, le dosage des acides aminés ayant été effectué sur le surnageant. Les résultats sont exprimés en % de la fraction totale en acides aminés.

Les % respectifs en valine (Val), méthionine (Met), thréonine (Thr), et leucine (Leu), exprimés par rapport à la fraction totale en acides aminés, ont été déterminés pour chacune des fractions protéiques extraites.

**Tableau II**

| Enzyme utilisée | Val | Met | Thr | Leu |
|---|---|---|---|---|
| Shearzyme® | 2,61 | 0 | 3,71 | 1,70 |
| Celluclast® + Finizym® | 2,57 | 0 | 2,38 | 1,82 |
| Ultraflow® | 3,83 | 0 | 3,77 | 3,27 |
| Shearzyme®+ Ultraflow® | 3,45 | 0,28 | 3,81 | 2,95 |
| Shearzyme®+ Finizym® | 2,86 | 0,48 | 4,48 | 1,57 |
| Celluclast® | 2,29 | 0 | 2,54 | 1,74 |
| **Celluclast® + Sbearzyme®** | 2,34 | **0,53** | 2,39 | 1,77 |
| **Celluclast® + Ultraflow®** | **3,10** | 0 | 3,32 | **2,64** |

Ces résultats mettent en évidence qu'une des combinaisons enzymatiques préférées selon l'invention, à savoir l'association d'une cellulase et d'une β-glucanase conduit aux meilleurs résultats en terme de % de valine et de leucine obtenus par rapport à la fraction totale en acides aminés.

Ces résultats montrent également que l'une des combinaisons enzymatiques préférées selon l'invention, à savoir l'association d'une cellulase et d'une xylanase conduit au meilleur résultat en terme de % de méthionine obtenu par rapport à la fraction totale en acides aminés.

Ces résultats sont significatifs de la valeur nutritionnelle particulièrement intéressante des fractions protéiques solubles obtenues en mettant en oeuvre le procédé conforme à l'invention.

### 2.3 Digestibilité des protéines

Les résultats obtenus en fonction de la nature des enzymes utilisées lors de l'extraction sont regroupés dans le Tableau III ci-après :

**Tableau III**

| Enzyme(s) utilisée(s) | Temps en heures | | | | | |
|---|---|---|---|---|---|---|
| | 1 | 2 | 3 | 4 | 5 | 6 |
| **Celluclast® + Shearzyme®** | **19,7** | **39,5** | **50,8** | **60,1** | **68,9** | **77,2** |
| **Shearzyme® + Ultraflow®** | **17,7** | **32,7** | **42,8** | **48,6** | **53,2** | **58,1** |
| **Shearzyme® + Finizym®** | **11,9** | **24,7** | **33,3** | **39,3** | **43,7** | **47,1** |
| Celluclast® | 12,6 | 26,6 | 34,2 | 41 | 44,6 | 45,5 |
| Celluclast® + Ultraflow® | 11,8 | 20,7 | 27,5 | 33,8 | 37,5 | 41,2 |

(suite)

| Enzyme(s) utilisée(s) | Temps en heures | | | | | |
|---|---|---|---|---|---|---|
| | 1 | 2 | 3 | 4 | 5 | 6 |
| Ultraflow® | 10,1 | 20,8 | 27,3 | 32,4 | 36,4 | 39,9 |
| Caséine | 5,1 | 14,5 | 21,4 | 28,6 | 34,7 | 39,8 |
| Shearzyme® | 10,8 | 18,7 | 25,8 | 30,8 | 35,7 | 39,3 |
| Celluclast® + Finizym® | 9,03 | 16,7 | 25,1 | 30,8 | 31,3 | 33,8 |

Ce tableau montre que les meilleurs résultats en terme de digestibilité des protéines sont obtenus avec les combinaisons d'enzymes conformes à l'invention, c'est à dire renfermant au moins une xylanase à titre de première enzyme et au moins une cellulase et/ou au moins une β-glucanase à titre de deuxième enzyme.

Ces résultats sont nettement meilleurs que ceux observés par exemple avec Ultraflow® qui correspond à une β-glucanase utilisée seule et qui donnait pourtant de bons résultats en terme d'extraction protéique mais qui de façon surprenante de donne pas de résultat significativement différent de ceux qui sont obtenus avec la caséine témoin.

Ce tableau montre également que la combinaison Shearzyme® + Ultraflow® qui correspond à l'association conforme à l'invention d'une xylanase et d'une β-glucanase donne d'excellents résultats en terme de digestibilité alors que les résultats obtenus avec cette même association en terme d'extraction n'étaient pas complètement satisfaisants (voir Tableau I).

## Revendications

1. Utilisation d'une composition enzymatique comprenant au moins une première enzyme choisie parmi les xylanases et au moins une seconde enzyme choisie parmi les cellulases et les β-glucanases dans un procédé d'extraction des protéines de l'algue *P. palmata* comprenant au moins une étape d'extraction enzymatique dans un milieu d'extraction approprié selon laquelle on soumet des fragments lyophilisés de ladite algue à l'action de ladite composition enzymatique et une étape de récupération des protéines extraites, pour améliorer la digestibilité de la fraction protéique soluble de *P. palmata.*

2. Procédé d'extraction des protéines de l'algue *P. palmata* comprenant au moins une étape d'extraction enzymatique et une étape de récupération des protéines extraites, **caractérisé par le fait que** lors de l'étape d'extraction enzymatique, on soumet, dans un milieu d'extraction approprié, des fragments lyophilisés de ladite algue à l'action d'une composition enzymatique comprenant au moins une combinaison d'au moins deux enzymes, la première enzyme étant choisie parmi les xylanases de *Trichoderma reesi,* les xylanases d'*Aspergillus aculeatus et d'Aspergillus oryzae* modifié génétiquement pour la production de xylanase *d'Aspergillus aculeatus,* et la seconde enzyme étant choisie parmi les cellulases et les β-glucanases, pour obtenir une fraction protéique soluble de *P. palmata.*

3. Procédé selon la revendication 2, **caractérisé par le fait que** la première enzyme est choisie parmi les xylanases d'*Aspergillus aculeatus* et *d'Aspergillus oryzae* modifié génétiquement pour la production de xylanase *d'Aspergillus aculeatus.*

4. Procédé selon la revendication 2 ou 3, **caractérisé par le fait que** la seconde enzyme est choisie parmi les cellulases de *Trichoderma reesi* et *Trichoderma viride* et les β-glucanases d'*Aspergillus niger* et d'*Humicola insolens.*

5. Procédé selon l'une quelconque des revendications 2 à 4, **caractérisé par le fait que** la première enzyme est choisie parmi les xylanases d'*Aspergillus aculeatus* et *d'Aspergillus oryzae* modifié génétiquement pour la production de xylanase d'*Aspergillus aculeatus* et la seconde enzyme est choisie parmi les cellulases de *Trichoderma reesi.*

6. Procédé selon l'une quelconque des revendications 2 à 4, **caractérisé par le fait que** la première enzyme est choisie parmi les xylanases de *d'Aspergillus aculeatus* et *d'Aspergillus oryzae* modifié génétiquement pour la production de xylanase *d'Aspergillus aculeatus* et la seconde enzyme est choisie parmi les β-glucanases d'*Humicola insolens.*

7. Procédé selon l'une quelconque des revendications 2 à 6, **caractérisé par le fait que** la première enzyme représente de 0,01 à 10 % en poids du poids des fragments de l'algue à traiter.

8. Procédé selon l'une quelconque des revendications 2 à 7, **caractérisé par le fait que** la deuxième enzyme représente de 0,3 à 10 % en poids du poids des fragments de l'algue à traiter.

9. Procédé selon l'une quelconque des revendications 2 à 8, **caractérisé par le fait que** la quantité totale d'enzymes est comprise entre 5 et 20 U/g de fragment d'algue à traiter.

10. Procédé selon l'une quelconque des revendications 2 à 9, **caractérisé par le fait que** le milieu d'extraction est un milieu tampon choisi parmi l'acétate de sodium, les tampons phosphate tels que le phosphate de sodium, et l'oxalate de sodium.

11. Procédé selon l'une quelconque des revendications 2 à 10, **caractérisé par le fait que** les fragments d'algue représentent de 1 à 15 % en poids du poids total du milieu d'extraction.

12. Procédé selon l'une quelconque des revendications 2 à 11, **caractérisé par le fait que** l'étape d'extraction enzymatique est réalisée à une température comprise entre 35 et 50°C.

13. Procédé selon l'une quelconque des revendications 2 à 12, **caractérisé par le fait que** le pH du milieu d'extraction est compris entre 3 et 8.

## Claims

1. Use of an enzymatic composition comprising at least one first enzyme selected from xylanases and at least one second enzyme selected from cellulases and β-glucanases in a method of extracting the proteins from the alga *P. palmata,* comprising at least one step for enzymatic extraction in an appropriate extraction medium, wherein lyophilized fragments of said alga are subjected to the action of said enzymatic composition, and a step for recovery of the extracted proteins, in order to improve the digestibility of the soluble protein fraction of *P. palmata.*

2. Method of extracting the proteins from the alga *P. palmata*, comprising at least one enzymatic extraction step and a step for recovery of the extracted proteins, **characterized in that**, in the enzymatic extraction step, lyophilized fragments of said alga are subjected, in an appropriate extraction medium, to the action of an enzymatic composition comprising at least one combination of at least two enzymes, the first enzyme being selected from the xylanases of *Trichoderma reesi* and the xylanases of *Aspergillus aculeatus* and of *Aspergillus oryzae* which has been genetically modified for the production of the xylanase of *Aspergillus aculeatus,* and the second enzyme being selected from cellulases and β-glucanases, to give a soluble protein fraction of *P. palmata.*

3. Method according to Claim 2, **characterized in that** the first enzyme is selected from the xylanases of *Aspergillus aculeatus* and of *Aspergillus oryzae* which has been genetically modified for the production of the xylanase of *Aspergillus aculeatus.*

4. Method according to Claim 2 or 3, **characterized in that** the second enzyme is selected from the cellulases of *Trichoderma reesi* and *Trichoderma viride* and the β-glucanases of *Aspergillus niger* and *Humicola insolens.*

5. Method according to any one of Claims 2 to 4, **characterized in that** the first enzyme is selected from the xylanases of *Aspergillus aculeatus* and of *Aspergillus oryzae* which has been genetically modified for the production of the xylanase of *Aspergillus aculeatus,* and the second enzyme is selected from the cellulases of *Trichoderma reesi.*

6. Method according to any one of Claims 2 to 4, **characterized in that** the first enzyme is selected from the xylanases of *Aspergillus aculeatus* and of *Aspergillus oryzae* which has been genetically modified for the production of the xylanase of *Aspergillus aculeatus,* and the second enzyme is selected from the β-glucanases of *Humicola insolens.*

7. Method according to any one of Claims 2 to 6, **characterized in that** the first enzyme represents from 0.01 to 10 wt.% of the weight of the fragments of alga to be treated.

8. Method according to any one of Claims 2 to 7, **characterized in that** the second enzyme represents from 0.3 to 10 wt.% of the weight of the fragments of alga to be treated.

9. Method according to any one of Claims 2 to 8, **characterized in that** the total amount of enzymes is between 5 and 20 U/g of fragments of alga to be treated.

10. Method according to any one of Claims 2 to 9, **characterized in that** the extraction medium is a buffer medium selected from sodium acetate, phosphate buffers such as sodium phosphate, and sodium oxalate.

11. Method according to any one of Claims 2 to 10, **characterized in that** the fragments of alga represent from 1 to 15 wt.% of the total weight of the extraction medium.

12. Method according to any one of Claims 2 to 11, **characterized in that** the enzymatic extraction step is carried out at a temperature of between 35 and 50°C.

13. Method according to any one of Claims 2 to 12, **characterized in that** the pH of the extraction medium is between 3 and 8.

**Patentansprüche**

1. Verwendung einer enzymatischen Zusammensetzung mit mindestens einem ersten, aus Xylanasen ausgewählten Enzym und mindestens einem zweiten, aus Cellulasen und β-Glucanasen ausgewählten Enzym in einem Extraktionsverfahren von Proteinen der Alge *P. palmata,* mindestens einen Schritt der enzymatischen Extraktion in einem geeigneten Extraktionsmedium umfassend, demgemäß lyophilisierte Fragmente der Alge der Wirkung der enzymatischen Zusammensetzung ausgesetzt werden, und einen Schritt der Wiedergewinnung der extrahierten Proteine, um die Verdaubarkeit des löslichen Proteinanteils von *P. palmata* zu verbessern.

2. Extraktionsverfahren für Proteine der Alge *P. palmata,* mindestens einen Schritt der enzymatischen Extraktion und einen Schritt der Wiedergewinnung der extrahierten Proteine umfassend, **dadurch gekennzeichnet, dass** während des Schritts der enzymatischen Extraktion lyophilisierte Fragmente der Alge in einem geeigneten Extraktionsmedium der Wirkung einer enzymatischen Zusammensetzung ausgesetzt werden, die mindestens eine Kombination mindestens zweier Enzyme umfasst, wobei das erste Enzym aus den Xylanasen von *Trichoderma reesi,* den Xylanasen von *Aspergillus aculeatus* und *Aspergillus oryzae* ausgewählt ist, der zur Herstellung von Xylanase von *Aspergillus aculeatus* genetisch verändert wurde, und das zweite Enzym aus Cellulasen und β-Glucanasen ausgewählt ist, um einen löslichen Proteinanteil von *P. palmata* zu erhalten.

3. Verfahren nach Anspruch 2, **dadurch gekennzeichnet, dass** das erste Enzym aus den Xylanasen von *Aspergillus aculeatus* und *Aspergillus oryzae* ausgewählt ist, der für die Herstellung von Xylanase von *Aspergillus aculeatus* genetisch verändert wurde.

4. Verfahren nach Anspruch 2 oder 3, **dadurch gekennzeichnet, dass** das zweite Enzym aus den Cellulasen von *Trichoderma reesi* und *Trichoderma viride* und den β-Glucanasen von *Aspergillus niger* und *Humicola insolens* ausgewählt ist.

5. Verfahren nach einem der Ansprüche 2 bis 4, **dadurch gekennzeichnet, dass** das erste Enzym aus den Xylanasen von *Aspergillus aculeatus* und *Aspergillus oryzae* ausgewählt ist, der für die Herstellung von Xylanase von *Aspergillus aculeatus* genetisch verändert wurde, und das zweite Enzym aus den Cellulasen von *Trichoderma reesi* ausgewählt ist.

6. Verfahren nach einem der Ansprüche 2 bis 4, **dadurch gekennzeichnet, dass** das erste Enzym aus den Xylanasen von *Aspergillus aculeatus* und *Aspergillus oryzae* ausgewählt ist, der für die Herstellung von Xylanase von *Aspergillus aculeatus* genetisch verändert wurde, und das zweite Enzym aus den β-Glucanasen von *Humicola insolens* ausgewählt ist.

7. Verfahren nach einem der Ansprüche 2 bis 6, **dadurch gekennzeichnet, dass** das erste Enzym 0,01 bis 10 Gew.-% der Fragmente der zu verarbeitenden Alge darstellt.

8. Verfahren nach einem der Ansprüche 2 bis 7, **dadurch gekennzeichnet, dass** das zweite Enzym 0,3 bis 10 Gew.-% der Fragmente der zu verarbeitenden Alge darstellt.

9. Verfahren nach einem der Ansprüche 2 bis 8, **dadurch gekennzeichnet, dass** die Gesamtmenge an Enzymen zwischen 5 und 20 U/g des zu verarbeitenden Algenfragments liegt.

10. Verfahren nach einem der Ansprüche 2 bis 9, **dadurch gekennzeichnet, dass** das Extraktionsmedium eine Pufferlösung ist, die aus Natriumacetat, Phosphatpuffern wie Natriumphosphat und Natriumoxalat ausgewählt ist.

11. Verfahren nach einem der Ansprüche 2 bis 10, **dadurch gekennzeichnet, dass** die Algenfragmente 1 bis 15 Gew.-% des Gesamtgewichts des Extraktionsmediums darstellen.

12. Verfahren nach einem der Ansprüche 2 bis 11, **dadurch gekennzeichnet, dass** der Schritt der enzymatischen Extraktion bei einer Temperatur zwischen 35 und 50°C durchgeführt wird.

13. Verfahren nach einem der Ansprüche 2 bis 12, **dadurch gekennzeichnet, dass** der pH-Wert des Extraktionsmediums zwischen 3 und 8 liegt.

FIGURE 1